# NOUVEAU FASCICULE DE BREVET EUROPEEN

(11) **EP 1 817 955 B2**
(45) Date de publication et mention de la décision concernant l'opposition: **25.07.2012**
(45) Mention de la délivrance du brevet: 26.11.2008
(21) Numéro de dépôt: 06101518.6
(22) Date de dépôt: 10.02.2006
(51) Int. Cl.: A01G 25/02, B29C 47/02

(54) **Installation et procédé de fabrication de tuyaux d'irrigation goutte à goutte**
Anlage und Verfahren zur Herstellung von Röhren zur tropfenweisen Bewässerung
Installation and method for the production of pipes for drip irrigation

(43) Date de publication de la demande: 15.08.2007
(73) Titulaire: THE Machines Yvonand SA, 1462 Yvonand (CH)
(72) Inventeur: Kertscher, Eberhard, 1462 Yvonand (CH)
(74) Mandataire: Ravenel, Thierry Gérard Louis

(56) Documents cités:
- EP-A- 0 970 602
- EP-A- 1 208 741
- WO-A-99/55141
- US-A- 6 039 270
- US-B1- 6 896 758

## Description

La présente invention concerne une ligne de fabrication de tuyaux d'irrigation goutte-à-goutte. Plus particulièrement, l'invention concerne une telle installation dotée d'un dispositif d'amenée de goutteurs permettant un soudage au tuyau amélioré.

Il est de technique courante d'utiliser, pour certaines irrigations, des tuyaux dits "goutte-à-goutte". Il s'agit de tuyaux dont la paroi est percée, à des intervalles de distance fixés à l'avance, par des trous de petit diamètre par lesquels l'eau s'écoule dans le sol. Pour contrôler avec précision le débit des trous, on prévoit au niveau de chaque trou un limiteur de débit couramment appelé "goutteur" qui se compose d'une pièce en matière plastique creuse collée sur la paroi interne du tuyau. Cette pièce présente, du côté tourné vers la paroi intérieure du tuyau, une partie en creux qui forme une chambre collectrice. Cette chambre collectrice est reliée à l'espace intérieur du tuyau par un conduit formant un labyrinthe constitué par une rainure préparée à l'avance sur la face cylindrique du goutteur qui est destinée à être tournée vers la face interne du tuyau.

Dans les installations de fabrication de tuyaux d'irrigation goutte-à-goutte comme, par exemple, celle décrite dans la demande de brevet EP 0 970 602, des goutteurs sont amenés de manière régulière dans un poste d'extrusion comprenant des moyens d'extrusion, de calibrage et de soudage à partir d'un dispositif d'approvisionnement tel qu'un bol centrifugeur et orienteur permettant de fournir les goutteurs selon une orientation déterminée. Dans le poste d'extrusion alimenté par de la matière plastique fondue dans une chambre de fusion, le tuyau est formé en continu par une tête d'extrusion, calibré, et les goutteurs sont soudés à intervalles réguliers à la paroi intérieure du tuyau encore chaud afin qu'ils se collent contre celle-ci en fondant localement. Une fois l'ensemble tuyau-goutteurs refroidi dans un bac de refroidissement à eau, un trou est percé dans la paroi du tuyau, au droit de la chambre collectrice.

Selon ce document, les goutteurs sont amenés au contact du tuyau et soudés à celui-ci à l'aide d'un support de guidage qui pénètre et traverse le poste d'extrusion pour s'étendre jusque dans le bac de refroidissement dans lequel est prévu un dispositif permettant le pincement de l'ensemble goutteur tuyau entre le support de guidage et une courroie se déplaçant sensiblement à la vitesse de progression du tuyau. Le soudage a donc lieu en aval de la chambre de fusion et du calibreur dans le bac de refroidissement. A ce point, le tuyau est déjà fortement refroidi, si bien que la soudure entre le goutteur et le tuyau peut présenter des imperfections.

Pour remédier à ce problème, il est courant de surchauffer la matière plastique afin que sa température soit encore suffisamment élevée au point de soudage des goutteurs. La matière est ainsi amenée à une température proche de sa limite de dégradation moléculaire. De faibles variations de température peuvent alors entraîner une dégradation de la qualité de la matière, ce qui implique un contrôle très strict de la température de chauffage et, par conséquent, une augmentation des coûts de production. Une autre solution, permettant d'éviter ce surchauffage de la matière plastique, consiste à chauffer les goutteurs eux-mêmes avant leur mise en contact avec le tuyau. Pour ce faire le support de guidage est doté d'une résistance chauffante. Cette solution entraîne toutefois un encombrement, une complication et un surcoût importants.

Les documents US 6 898 758 et US 6 039 270 décrivent des installations pour la fabrication d'un tuyau d'irrigation goutte à goutte dans laquelle les goutteurs sont soudés en amont des moyens de calibrage et à l'extérieur des moyens d'extrusion.

La présente invention se propose donc d'améliorer le soudage du goutteur au tuyau en réalisant la soudure selon la revendication 5 du brevet.

Grâce à ces caractéristiques, il est possible souder les goutteurs de manière plus sûre sans avoir à chauffer de manière excessive de la matière plastique tout en simplifiant l'installation.

Selon un mode de réalisation particulièrement avantageux de l'invention, la tête d'extrusion comporte une filière formée d'un mandrin extérieur et d'un mandrin intérieur agencés ensemble de façon à définir un canal d'extrusion dans lequel se forme l'ébauche tubulaire, le mandrin intérieur et le mandrin extérieur comportant respectivement une portion cylindrique extérieure et intérieure engagées respectivement l'une dans l'autre de façon à définir au moins en partie le canal d'extrusion, la portion cylindrique extérieure du mandrin intérieur étant plus courte que la portion cylindrique intérieure du mandrin extérieur, de façon à ce que l'extrémité de la portion cylindrique intérieure forme la surface d'appui.

Selon un autre aspect l'invention concerne une installation pour la fabrication d'un tuyau d'irrigation goutte à goutte formé d'un tuyau doté de goutteurs, selon la revendication 18 du brevet. L'invention concerne également un procédé de fabrication d'un tuyau d'irrigation goutte à goutte formé d'un tuyau doté de goutteurs, selon la revendication 1 du brevet.

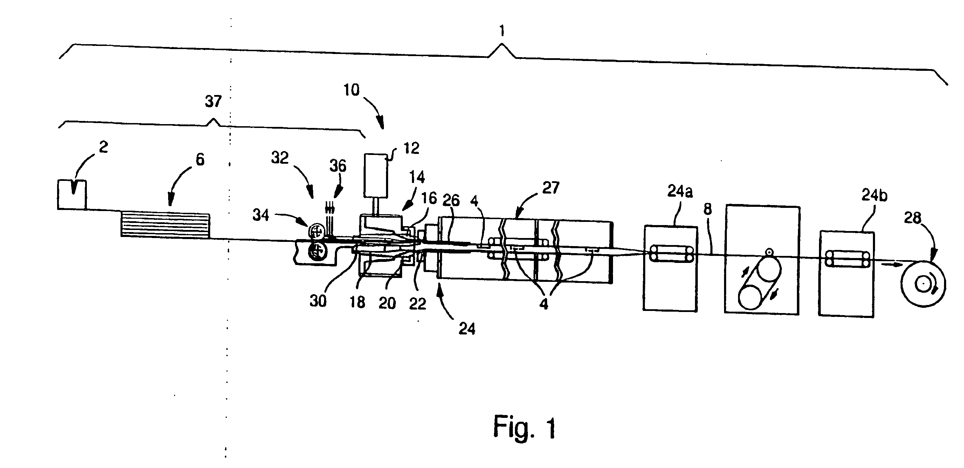

L'invention sera mieux comprise à la lumière de la description détaillée qui suit d'un exemple de réalisation du dispositif accumulateur selon l'invention, cet exemple étant donné à titre purement illustratif et non limitatif, en liaison avec le dessin annexé sur lequel :
- la figure 1 est une représentation schématique d'une installation de fabrication de tuyaux d'irrigation du type goutte-à-goutte selon l'invention;
- la figure 2 est une vue en coupe axiale d'une la tête d'extrusion selon l'invention; et
- la figure 3 est une vue partielle agrandie d'une coupe transversale de cette même tête d'extrusion.
La ligne de fabrication de tuyaux d'irrigation du type goutte-à-goutte représentée en figure 1 et désignée dans son ensemble par la référence numérique générale 1, comprend classiquement un magasin 2 tel qu'un bol centrifugeur qui permet de trier, d'orienter et de positionner des goutteurs 4 dans un dispositif accumulateur 6 en conformité avec la position qu'ils devront avoir une fois qu'ils seront introduits dans le tuyau d'irrigation 8. A la suite du dispositif accumulateur 6 est disposé un poste d'extrusion 10. Ce poste d'extrusion 10 comprend une chambre de fusion 12 de la matière plastique qui alimente une tête d'extrusion 14 pourvue d'une filière 16 formée d'un mandrin intérieur conique 18 et d'un mandrin extérieur 20 agencés de telle façon qu'il sorte de la filière 16 une ébauche tubulaire 22. L'ébauche 22 est tirée par des postes de traction 24a et 24b en passant à travers des moyens de calibrage 26 et un bac de refroidissement 27. Au-delà du poste de traction 24b, le tuyau 8 est enroulé sur un tambour 28.

Pour fixer les goutteurs 4, il est prévu que le mandrin intérieur 18 présente un passage axial à l'intérieur duquel est disposé un support de guidage 30 permettant d'acheminer les goutteurs jusqu'au contact du tuyau 8 en formation. Le support de guidage 30 reçoit les goutteurs 4 à partir du magasin 2 via le dispositif accumulateur 6. Un dispositif de déplacement 32 muni, dans l'exemple représenté, de galets entraîneurs 34 assistés par des jets d'air 36 est prévu pour faire avancer les goutteurs 4 jusqu'à l'intérieur du poste d'extrusion 10. Le support de guidage 30 forme, avec le dispositif de déplacement 32, le magasin 2 et le dispositif accumulateur 6, un poste d'amenée des goutteurs 37.

Une telle disposition générale est classique dans la technique de fabrication des tuyaux d'irrigation goutte à goutte.

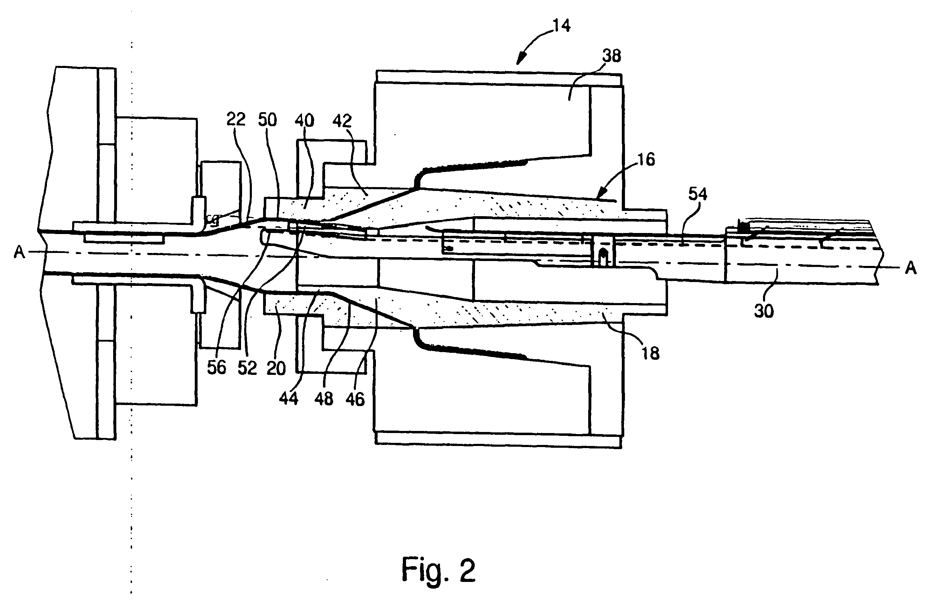

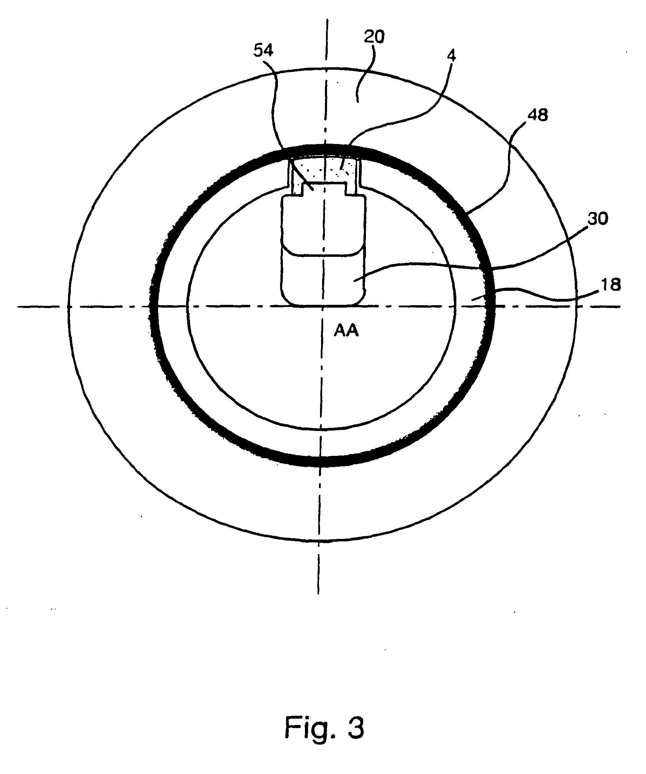

La tête d'extrusion 14 représentée sur les figures 2 et 3, comprend classiquement une filière 16 montée rigidement à l'intérieur d'un bâti 38. La filière 16 est formée d'un mandrin extérieur 20 d'axe de symétrie AA et d'un mandrin intérieur 18 engagé dans le mandrin extérieur 20 et coaxial à celui-ci. Le mandrin extérieur 20 forme sensiblement un tube creux comportant une portion cylindrique 40, et une portion conique 42 prolongeant la portion cylindrique 40. Le mandrin intérieur 18 forme également sensiblement un tube creux comprenant une portion cylindrique 44 s'évasant en une portion conique 46. Les portions cylindriques 40, respectivement 44, et coniques 42, respectivement 46, du mandrin extérieur 20 et du mandrin intérieur 18 sont disposées en regard respectivement les unes des autres, de façon à définir un canal d'extrusion 48 destiné à mettre en forme la matière plastique.
Selon l'invention, la portion cylindrique 44 du mandrin intérieur 18 est plus courte que la portion cylindrique 40 du mandrin extérieur 20, de sorte que l'extrémité de ce dernier est saillante par rapport au canal d'extrusion 48 lorsque le mandrin intérieur 18 est engagé dans le mandrin extérieur 20. La surface intérieure de cette portion saillante forme une surface d'appui 50, située directement en sortie du canal d'extrusion 48. Sa fonction sera explicitée ultérieurement. Par ailleurs, le mandrin intérieur 18 comporte une gorge 52 pratiquée dans sa portion cylindrique 44. Le fond de la gorge 52 forme un angle α aussi faible que possible avec la surface d'appui 50, elle-même parallèle à l'axe AA. Typiquement, l'angle α prend des valeurs comprises entre 2° et 15°, de préférence 5°. A l'extrémité intérieure de la portion cylindrique 44, le fond de la gorge 52 est affleurant avec la surface intérieure de la portion cylindrique 44. A l'extrémité extérieure de la portion cylindrique 44, l'épaisseur de la paroi du mandrin intérieur 18 est aussi faible que possible, de sorte que le fond de la gorge 52 est pratiquement affleurant avec la surface extérieure de la portion cylindrique 44. A titre d'exemple, l'épaisseur de la paroi du mandrin intérieur 18 au voisinage de l'ébauche tubulaire 22 est comprise entre 0.1 mm et 1 mm. La fonction de la gorge 52 sera explicitée par la suite.

Le support de guidage 30 est constitué d'une tige dont la surface supérieure forme un rail de guidage 54 pour les goutteurs 4. Il est engagé dans le mandrin intérieur 18, le rail de guidage 54 situé en regard de la gorge 52. Son extrémité coïncide sensiblement avec l'extrémité du mandrin extérieur 20. La surface supérieure du support de guidage 30 est tout d'abord parallèle à l'axe AA, puis, à hauteur de la portion cylindrique 44, s'incline d'un angle α, parallèlement au fond de la gorge 52. Enfin, sa portion finale située en regard de la surface d'appui 50 est parallèle à l'axe AA, et forme une surface de contre-appui 56, comme décrit dans la suite de cet exposé.

Lorsqu'un goutteur 4 est acheminé par le support de guidage 30, grâce au dispositif de déplacement 32, il est tout d'abord guidé dans son déplacement par le rail 54, parallèlement à l'axe AA. Il pénètre ensuite dans la gorge 52, et poursuit son déplacement avec une inclinaison d'un angle α par rapport à l'axe AA, guidé simultanément par le rail 54 et la gorge 52. En sortie de la gorge 52, il arrive au contact de l'ébauche tubulaire 22, elle même tout juste extraite du canal d'extrusion 48. Il se présente pratiquement tangent à l'ébauche tubulaire 22 au point de contact, grâce au fait que l'angle α et l'épaisseur de la paroi du mandrin intérieur 18 au voisinage de l'ébauche tubulaire 22, sont faibles. Cette géométrie permet au goutteur 4 d'entrer en contact avec l'ébauche tubulaire 22 encore très chaude et visqueuse en sortie du canal d'extrusion 48, sans l'endommager notamment sans la percer. Le goutteur 4 poursuit alors son déplacement, soudé à l'ébauche tubulaire 22 par son extrémité, et toujours guidé par le rail 54. Il arrive enfin sur la portion finale du support de guidage 30, parallèlement à l'axe AA et à la surface d'appui 50. La distance entre la surface d'appui 50 et la surface de contre-appui 56 est choisie de sorte que, dans cette zone, le goutteur 4 est pressé contre l'ébauche tubulaire 22, entre les deux surfaces 50 et 56. Il est ainsi soudé à l'ébauche tubulaire 22 sur toute sa longueur. Le soudage étant réalisé dans la tête d'extrusion 14, directement en sortie du canal d'extrusion 48, il se fait au plus près de la chambre de fusion, à une température suffisamment élevée pour assurer la qualité de la soudure.

Dans le mode de réalisation présenté ci-dessus, la surface d'appui 50 est constituée par le prolongement du mandrin extérieur 20 au delà du canal d'extrusion 48. Cet agencement est particulièrement simple à réaliser et ne nécessite pas de pièce supplémentaire par rapport au mandrin extérieur 20 et au mandrin intérieur 18. Dans une première variante de ce mode de réalisation, le mandrin extérieur 20 ne se prolonge au delà du canal d'extrusion 48 que dans la zone située directement en regard du support de guidage 30, pour former la surface d'appui 50. En effet, seule cette surface 50 étant fonctionnelle, le reste de la portion cylindrique 40 prolongeant le canal d'extrusion 48 peut être éliminé. Dans une deuxième variante de ce mode de réalisation, la surface d'appui 50 est formée par une pièce rapportée cylindrique ou formant une portion de cylindre, fixée, par exemple, à la portion de cylindre 40.

Le mode de réalisation décrit ci-dessus est compatible avec toute épaisseur de tuyaux d'irrigation et en particulier avec des tuyaux d'épaisseur faible, par exemple de l'ordre de 0.1mm. Un autre mode de réalisation (non représenté) se prête de préférence à la fabrication de tuyaux plus épais. Ce mode de réalisation ne se distingue du mode de réalisation précédent qu'en ce que, la surface d'appui 50 est absente. En effet, pour les tuyaux dont la paroi est d'épaisseur supérieure à 0.4mm, l'ébauche tubulaire 22, grâce à sa tension en sortie du canal d'extrusion présente une résistance suffisante pour s'opposer à la pression du goutteur 4 sans être endommagée. Dans ce mode de réalisation, la portion cylindrique 44 du mandrin intérieur 18 est de même longueur que la portion cylindrique 40 du mandrin extérieur 20. Leurs extrémités sont donc alignées lorsque le mandrin intérieur 18 est engagé dans le mandrin extérieur 20. L'extrémité du support de guidage 30 est saillante par rapport à la tête d'extrusion 14, de sorte que la surface de contre-appui 56 est située en regard de l'ébauche tubulaire 22 en sortie du canal d'extrusion 48. La surface 56 est agencée de manière à ce que le goutteur 4 soit pressé entre celle-ci et l'ébauche tubulaire 22, afin de s'y souder. On parlera dans ce cas d'une surface 56 d'appui et non pas de contre-appui.

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées.

On notera par exemple que selon une variante des modes de réalisation décrits, la gorge 52 peut être omise, le guidage du goutteur 4 jusqu'à l'ébauche tubulaire 22 pouvant être réalisé par le rail de guidage 54 seul. Dans ce cas, la portion cylindrique 44 présentera avantageusement une portion conique définie par son angle α avec l'axe AA, l'angle α étant suffisamment faible pour que le goutteur arrive pratiquement tangent à l'ébauche tubulaire 22.

On pourra également prévoir de remplacer la gorge 52 par une creusure n'ayant pas de propriété de guidage, mais permettant également d'orienter le goutteur 4 par rapport à l'ébauche tubulaire 22.

On notera enfin, que, selon une autre variante de la ligne de fabrication selon l'invention, les goutteurs 4 ne sont plus réalisés et soudés sous forme unitaire, mais sont reliés les uns aux autres par leur corps qui est réalisé en une seule pièce ayant la forme d'une bande continue. La bande comprend sur sa surface extérieure et à intervalle régulier, une pluralité de chambres de collecte reliées respectivement à un labyrinthe découpé dans ladite surface extérieure et en communication avec la surface intérieure de la bande. La bande peut être enroulée sur une bobine, et acheminée jusqu'au point de soudage avec l'ébauche tubulaire 22 par un support de guidage adéquat.

## Revendications

1. Procédé de fabrication d'un tuyau (8) d'irrigation goutte à goutte formé d'un tuyau (B) doté de goutteurs (4), comprenant les principales étapes suivantes :
- se doter d'un poste d'amenée des goutteurs (37), et d'un poste d'extrusion (10) comprenant une tête d'extrusion (14), des moyens de calibrage (24) et des moyens pour le soudage des goutteurs (4) à la paroi intérieure dudit tuyau (8),
- former en continu une ébauche tubulaire (22) à l'aide de ladite tête d'extrusion (14),
- calibrer ladite ébauche tubulaire (22) à l'aide des moyens de calibrage (24),
- amener lesdits goutteurs à l'intérieur de l'ébauche tubulaire (22) à l'aide du poste d'amenée des goutteurs (37), et
- souder lesdits goutteurs (4) en amont desdits moyens de calibrage (24) à l'aide desdits moyens de soudage (4), ladite opération de soudage desdits goutteurs (4) étant réalisée à l'intérieur de ladite tête d'extrusion (14).

2. Procédé selon la revendication 1, **caractérisé en ce que** la tête d'extrusion (14) comprend un canal d'extrusion (48) générant ladite ébauche tubulaire (22), et est associée à une surface d'appui (50) disposée au voisinage de la sortie dudit canal d'extrusion (48), et **en ce que** les moyens d'amenée desdits goutteurs (37) comportent une surface de contre-appui (56), lesdits goutteurs étant pressés entre lesdites surfaces (50, 56) contre ladite ébauche tubulaire (22) afin de s'y souder.

3. Procédé selon l'une des revendications 1 à 2, dans lequel la tête d'extrusion (14) comporte un canal d'extrusion et un mandrin intérieur (18) formant une portion cylindrique (44) dont la paroi est amincie au voisinage de la sortie du canal d'extrusion **caractérisé en ce que** le soudage est réalisé en sortie du canal d'extrusion.

4. Procédé selon l'une des revendications 1 à 3, **caractérisé en ce que** lesdits goutteurs (4) sont reliés les uns aux autres par leur corps réalisé en une seule pièce ayant la forme d'une bande continue.

5. Installation pour la fabrication d'un tuyau (8) d'irrigation goutte à goutte formé d'un tuyau (8) doté de goutteurs (4), comprenant un poste d'amenée des goutteurs (37) suivi d'un poste d'extrusion (10) comprenant une tête d'extrusion (14) produisant une ébauche tubulaire (22), des moyens de calibrage (24) de ladite ébauche tubulaire (22) et des moyens pour le soudage des goutteurs (4) à la paroi intérieure de ladite ébauche (22), **caractérisé en ce que** les moyens pour le soudage des goutteurs (4) comportent une surface d'appui (50) et une surface de contre-appui (56) entre lesquelles les goutteurs (4) sont pressés contre ladite ébauche tubulaire (22) de façon à s'y souder, lesdites surfaces d'appui (50) et de contre-appui (56) étant disposées à l'intérieur de ladite tête d'extrusion.

6. Installation selon la revendication 5, **caractérisée en ce que** ledit poste d'amenée des goutteurs (37) est agencé de façon à acheminer lesdits goutteurs (4) entre lesdites surfaces (50, 56), la distance entre lesdites surfaces (50, 56) étant choisie de sorte que lesdits goutteurs (4) sont pressés contre l'ébauche tubulaire (22) entre lesdites surfaces (50, 56).

7. Installation selon l'une des revendications 5 et 6, **caractérisée en ce que** ladite surface d'appui (50) est accolée à la tête d'extrusion (14) et **en ce que** ladite surface de contre-appui (56) est disposée au voisinage immédiat de la tête d'extrusion (14), en regard de ladite surface d'appui (50).

8. Installation selon l'une des revendications 5 et 6, **caractérisée en ce que** ladite surface d'appui (50) est solidaire de la tête d'extrusion (14) et **en ce que** ladite surface de contre-appui (56) est disposée à l'intérieur de la tête d'extrusion (14), en regard de ladite surface d'appui (50).

9. Installation selon la revendication 8, **caractérisée en ce que** ladite tête d'extrusion (14) comporte une filière (16) formée d'un mandrin extérieur (20) et d'un mandrin intérieur (18) agencés ensemble de façon à définir un canal d'extrusion (48) dans lequel se forme ladite ébauche tubulaire (22), ladite surface d'appui (50) étant située en sortie du canal d'extrusion (48), sensiblement parallèle à ladite surface de ... contre-appui (56).

10. Installation selon la revendication 9, **caractérisé en ce que** ledit mandrin intérieur (18) et ledit mandrin extérieur (20) comportent chacun une portion cylindrique (44, 40) engagées respectivement l'une dans l'autre de façon à définir au moins en partie ledit canal d'extrusion (48), la paroi de la portion cylindrique (44) du mandrin intérieur (18) étant amincie au voisinage de la sortie du canal d'extrusion (48).

11. Installation selon la revendication 10, **caractérisée en ce que** la paroi de la portion cylindrique (44) du mandrin intérieur (18) présente une épaisseur comprise entre 0.1 mm et 1 mm au voisinage de la sortie du canal d'extrusion (48).

12. Installation selon l'une des revendications 10 et 11, **caractérisée en ce que** la surface intérieure de la portion cylindrique (44) forme un angle α faible avec ladite surface d'appui (50).

13. Installation selon l'une des revendications 10 à 12, **caractérisée en ce que** ladite portion cylindrique (44) du mandrin intérieur (18) est plus courte que ladite portion cylindrique (40) du mandrin extérieur (20), de façon à ce que l'extrémité de la portion cylindrique (40) forme ladite surface d'appui (50).

14. Installation selon l'une des revendications 10 à 13, **caractérisée en ce que** le poste d'amenée des goutteurs (37) comporte un support de guidage (30) engagé dans ledit mandrin intérieur (18) jusqu'à hauteur de ladite surface d'appui (50), la surface située en regard de ladite surface d'appui (50) formant ladite surface de contre-appui (56).

15. Installation selon l'une des revendications 10 à 13, **caractérisée en ce que** ledit mandrin intérieur (18) comporte une gorge (52) pratiquée dans ladite portion cylindrique (44), dont le fond forme un angle α faible avec ladite surface d'appui (50), et est affleurant avec la surface extérieure de la portion cylindrique (44) à son extrémité extérieure.

16. Installation selon l'une des revendications 14 et 15, **caractérisée en ce que** la face supérieure dudit support de guidage (30) est sensiblement parallèle au fond de ladite gorge (52), sur au moins une portion située en regard de celle-d.

17. Installation selon l'une des revendications 14 à 18, **caractérisée en ce que** la face supérieure dudit support de guidage (30) forme un rail de guidage (54).

18. Installation pour la fabrication d'un tuyau (8) d'irrigation goutte à goutte formé d'un tuyau (8) doté de goutteurs (4), comprenant un poste d'amenée des goutteurs (37) suivi d'un poste d'extrusion (10) comprenant une tête d'extrusion (14) produisant une ébauche tubulaire (22), des moyens de calibrage (24) de ladite ébauche tubulaire (22) et des moyens pour le soudage des goutteurs (4) à la paroi intérieure de ladite ébauche (22), **caractérisé en ce que** les moyens pour le soudage des goutteurs (4) comportent une surface d'appui (56) située en regard de ladite ébauche tubulaire (22) à une distance choisie de sorte que les goutteurs (4) sont pressés entre ladite surface d'appui (56) et ladite ébauche tubulaire (22) de façon à s'y souder, ladite surface d'appui (56) étant disposée à l'intérieur de ladite tête d'extrusion.

19. Installation selon la revendication 18, **caractérisée en ce que** ledit poste d'amenée des goutteurs (37) est agencé de façon à acheminer lesdits goutteurs (4) sur ladite surface d'appui (56).

20. Installation selon l'une des revendications 18 et 19, **caractérisée en ce que** ladite surface d'appui (56) est disposée au voisinage immédiat de la tête d'extrusion (14).

21. Installation selon la revendication 20, **caractérisée en ce que** ladite tête d'extrusion (14) comporte une filière (16) formée d'un mandrin extérieur (20) et d'un mandrin intérieur (18) agencés ensemble de façon à définir un canal d'extrusion (48) dans lequel se forme ladite ébauche tubulaire (22) et **en ce que** le poste d'amenée des goutteurs (37) comporte un support de guidage (30) engagé dans ledit mandrin intérieur (18) jusqu'à hauteur de ladite ébauche tubulaire (22), la surface située en regard de ladite ébauche tubulaire (22) formant ladite surface d'appui (56).

22. Installation selon la revendication 21, **caractérisé en ce que** ledit mandrin intérieur (18) et ledit mandrin extérieur (20) comportent chacun une portion cylindrique (44, 40) engagées respectivement l'une dans l'autre de façon à définir au moins en partie ledit canal d'extrusion (48), la paroi de la portion cylindrique (44) du mandrin intérieur (18) étant amincie au voisinage de la sortie du canal d'extrusion (48).

23. Installation selon la revendication 22, **caractérisée en ce que** la paroi de la portion cylindrique (44) du mandrin intérieur (18) présente une épaisseur comprise entre 0.1mm et 1 mm au voisinage de la sortie du canal d'extrusion (48).

24. Installation selon l'une des revendications 22 et 23, **caractérisée en ce que** la surface intérieure de la portion cylindrique (44) forme un angle α faible avec ladite surface d'appui (50).

## Claims

1. Method of manufacturing a drip irrigation pipe (8) formed of a pipe (8) provided with drippers (4), comprising the following main steps:
- providing a dripper feed station (37), and an extrusion station (10) including an extrusion head (14), calibrating means (24) and means for welding the drippers (4) to the inner wall of said pipe (8),
- continuously forming a tubular blank (22) using said extrusion head (14),
- calibrating said tubular blank (22) using calibrating means (24),
- conveying said drippers inside the tubular blank (22) using the dripper feed station (37), and
- welding said drippers (4) upstream of said calibrating means (24) using said welding means (4), said welding operation of said drippers (4) being made inside said extrusion head (14).

2. Method according to claim 1, **characterized in that** the extrusion head (14) includes an extrusion channel (48) generating said tubular blank (22) and is associated with a support surface (50) arranged in proximity to the exit of said extrusion channel (48), and **in that** said dripper feed means (37) include a counter-support surface (56), said drippers being pressed between said surfaces (50, 56) against said tubular blank (22) in order to be welded thereto.

3. Method according to any of claims 1 to 2, wherein the extrusion head (14) includes an extrusion channel and an inner mandrel (18) forming a cylindrical portion (44) whose wall is thinned in proximity to the exit of the extrusion channel, **characterized in that** the welding is carried out at the exit of the extrusion channel.

4. Method according to any of claims 1 to 3, **characterized in that** said drippers (4) are connected to each other via the body thereof made in a single piece having the shape of a continuous band.

5. Installation for manufacturing a drip irrigation pipe (8) formed of a pipe (8) provided with drippers (4), including a dripper feed station (37), followed by an extrusion station (10) including an extrusion head (14) producing a tubular blank (22), means (24) for calibrating said tubular blank (22) and means for welding the drippers (4) to the inner wall of said blank (22), **characterized in that** the dripper welding means (4) include a support surface (50) and a counter-support surface (56) between which the drippers (4) are pressed against said tubular blank (22) in order to be welded thereto, said support (50) and counter-support (56) surfaces being arranged inside said extrusion head.

6. Installation according to claim 5, **characterized in that** said dripper feed station (37) is arranged to convey said drippers (4) between said surfaces (50, 56), the distance between said surfaces (50, 56) being selected such that said drippers (4) are pressed against the tubular blank (22) between said surfaces (50, 56).

7. Installation according to any of claims 5 and 6, **characterized in that** said support surface (50) is coupled to the extrusion head (14) and **in that** said counter-support surface (56) is arranged in immediate proximity to the extrusion head (14), opposite said support surface (50).

8. Installation according to any of claims 5 and 6, **characterized in that** said support surface (50) is secured to the extrusion head (14) and **in that** said counter-support surface (56) is arranged inside the extrusion head (14), opposite said support surface (50).

9. Installation according to claim 8, **characterized in that** said extrusion head (14) includes a die (16) formed of an outer mandrel (20) and an inner mandrel (18) arranged together to define an extrusion channel (48) wherein said tubular blank (22) is formed, said support surface (50) being located at the exit of the extrusion channel (48), substantially parallel to said counter-support surface (56).

10. Installation according to claim 9, **characterized in that** said inner mandrel (18) and said outer mandrel (20) each include a cylindrical portion (44, 40) respectively engaged in one another so as to define at least in part said extrusion channel (48), the wall of the cylindrical portion (44) of the inner mandrel (18) being thinned in proximity to the exit of the extrusion channel (48).

11. Installation according to claim 10, **characterized in that** the wall of the cylindrical portion (44) of the inner mandrel (18) has a thickness comprised between 0.1 mm and 1 mm in proximity to the exit of the extrusion channel (48).

12. Installation according to any of claims 10 and 11, **characterized in that** the inner surface of the cylindrical portion (44) forms a small angle α with said support surface (50).

13. Installation according to any of claims 10 to 12, **characterized in that** said cylindrical portion (44) of the inner mandrel (18) is shorter than said cylindrical portion (40) of the outer mandrel (20), so that the end of the cylindrical portion (40) forms said support surface (50).

14. Installation according to any of claims 10 to 13, **characterized in that** the dripper feed station (37) includes a guide support (30) engaged in said inner mandrel (18) as far as the height of said support surface (50), the surface located opposite said support surface (50) forming said counter-support surface (56).

15. Installation according to any of claims 10 to 13, **characterized in that** said inner mandrel (18) includes a groove (52) made in said cylindrical portion (44), whose bottom forms a small angle α with said support surface (50), and is flush with the outer surface of the cylindrical portion (44) at the outer end thereof.

16. Installation according to any of claims 14 and 15, **characterized in that** the top face of said guide support (30) is substantially parallel to the bottom of said groove (52), over at least one portion located opposite the latter.

17. Installation according to any of claims 14 to 16, **characterized in that** the top face of said guide support (30) forms a guide rail (54).

18. Installation for manufacturing a drip irrigation pipe (8) formed of a pipe (8) provided with drippers (4), including a dripper feed station (37), followed by an extrusion station (10), including an extrusion head (14) producing a tubular blank (22), means (24) for calibrating said tubular blank (22) and means for welding the drippers (4) to the inner wall of said blank (22), **characterized in that** the dripper welding means (4) include a support surface (56) located opposite said tubular blank (22) at a distance selected such that the drippers (4) are pressed between said support surface (56) and said tubular blank (22) in order to be welded thereto, said support surface (56) being arranged inside said extrusion head.

19. Installation according to claim 18, **characterized in that** said dripper feed station (37) is arranged to convey said drippers (4) over said support surface (56).

20. Installation according to any of claims 18 and 19, **characterized in that** said support surface (56) is arranged in immediate proximity to the extrusion head (14).

21. Installation according to claim 20, **characterized in that** said extrusion head (14) includes a die (16) formed of an outer mandrel (20) and an inner mandrel (18) arranged together to define an extrusion channel (48) wherein said tubular blank (22) is formed, and **in that** the dripper feed station (37) includes a guide support (30) engaged in said inner mandrel (18) as far as the height of said tubular blank (22), the surface located opposite said tubular blank (22) forming said support surface (56).

22. Installation according to claim 21, **characterized in that** said inner mandrel (18) and said outer mandrel (20) each include a cylindrical portion (44, 40) respectively engaged in one another so as to define at least in part said extrusion channel (48), the wall of the cylindrical portion (44) of the inner mandrel (18) being thinned in proximity to the exit of the extrusion channel (48).

23. Installation according to claim 22, **characterized in that** the wall of the cylindrical portion (44) of the inner mandrel (18) has a thickness comprised between 0.1 mm and 1 mm in proximity to the exit of the extrusion channel (48).

24. Installation according to any of claims 22 and 23, **characterized in that** the inner surface of the cylindrical portion (44) forms a small angle α with said support surface (50).

## Patentansprüche

1. Verfahren zum Herstellen eines Rohrs (8) zur tropfenweisen Bewässerung, das aus einem Rohr (8) mit Tropfspendern (4) gebildet ist, wobei es die nachfolgenden Hauptschritte umfasst:
- Bereitstellen einer Tropfspenderzuführstation (37) und einer Extrusionsstation (10) mit einem Extrusionskopf (14), Kalibriermitteln (24) und Mitteln zum Verschweißen der Tropfspendern (4) mit der Innenwand des Rohrs (8),
- kontinuierliches Bilden eines rohrförmigen Rohlings (22) mit Hilfe der Kalibriermittel (24),
- Kalibrieren des rohrförmigen Rohlings (22) mit Hilfe der Kalibriermittel (24),
- Zuführen der Tropfspender in den Innenraum des rohrförmigen Rohlings (22) mit Hilfe der Tropfspenderzuführstation (37), und
- Verschweißen der Tropfspender (4) den Kalibriermitteln (24) vorgelagert mit Hilfe der Schweißmittel (4), wobei der Schweißvorgang durch das Verschweißen der Tropfspender (4) innerhalb des Extrusionskopfs (14) erfolgt.

2. Verfahren nach Anspruch 1, **dadurch gekennzeichnet, dass** der Extrusionskopf (14) einen den rohrförmigen Rohling (22) erzeugenden Extrusionskanal (48) aufweist und einer Auflagefläche (50) zugeordnet ist, die in der Nähe des Auslasses des Extrusionskanals (48) angeordnet ist, und dass die Tropfspenderzuführmittel (37) eine Gegenauflagefläche (56) aufweisen, wobei die Tropfspender zwischen den Flächen (50, 56) an den rohrförmigen Rohling (22) angedrückt werden, um damit verschweißt zu werden.

3. Verfahren nach einem der Ansprüche 1 bis 2, bei welchem der Extrusionskopf (14) einen Extrusionskanal und einen Innendorn (18) aufweist, der einen Zylinderabschnitt (44) bildet, dessen Wand sich in der Nähe des Auslasses des Extrusionskanals verjüngt, **dadurch gekennzeichnet, dass** das Verschweißen am Auslass des Extrusionskanals erfolgt.

4. Verfahren nach einem der Ansprüche 1 bis 3, **dadurch gekennzeichnet, dass** die Tropfspender (4) über ihren einstückigen Körper in Form eines durchgehenden Bandes miteinander verbunden sind.

5. Anlage zum Herstellen eines Rohrs (8) zur tropfenweisen Bewässerung, das aus einem Rohr (8) mit Tropfspendern (4) gebildet ist, enthaltend eine Tropfspenderzuführstation (37) gefolgt von einer Extrusionsstation (10) mit einem Extrusionskopf (14), der einen rohrförmigen Rohling (22) erzeugt, Kalibriermitteln (24) zum Kalibrieren des rohrförmigen Rohlings (22) und Mitteln zum Verschweißen der Tropfspender (4) mit der Innenwand des Rohlings (22), **dadurch gekennzeichnet, dass** die Mittel zum Verschweißen der Tropfspender (4) eine Auflagefläche (50) und eine Gegenauflagefläche (56) aufweisen, zwischen denen die Tropfspender (4) an den rohrförmigen Rohling (22) angedrückt werden, so dass sie damit verschweißt werden, wobei die Auflageflächen (50) und die Gegenauflageflächen (56) innerhalb des Extrusionskopfs angelagert sind.

6. Anlage nach Anspruch 5, **dadurch gekennzeichnet, dass** die Tropfspenderzuführstation (37) so angeordnet ist, dass sie die Tropfspender (4) zwischen die Flächen (50, 56) führt, wobei der Abstand zwischen den Flächen (50, 56) so gewählt ist, dass die Tropfspender (4) an den rohrförmigen Rohling (22) zwischen den Flächen (50, 56) angedrückt werden.

7. Anlage nach einem der Ansprüche 5 und 6, **dadurch gekennzeichnet, dass** die Auflagefläche (50) an den Extrusionskopf (14) angefügt ist und dass die Gegenauflagefläche (56) in unmittelbarer Nähe des Extrusionskopfs (14) der Auflagefläche (50) gegenüberliegend angeordnet ist.

8. Anlage nach einem der Ansprüche 5 und 6, **dadurch gekennzeichnet, dass** die Auflagefläche (50) fest mit dem Extrusionskopf (14) verbunden ist und dass die Gegenauflagefläche (56) innerhalb des Extrusionskopfs (14) der Auflagefläche (50) gegenüberliegend angeordnet ist.

9. Anlage nach Anspruch 8, **dadurch gekennzeichnet, dass** der Extrusionskopf (14) eine Düse (16) aufweist, die aus einem Außendorn (20) und einem Innendorn (18) gebildet ist, die zusammen so angeordnet sind, dass sie einen Extrusionskanal (48) definieren, in welchem sich der rohrförmige Rohling (22) bildet, wobei die Auflagefläche (50) am Auslass des Extrusionskanals (48) im wesentlichen parallel zur Gegenauflagefläche (56) liegt.

10. Anlage nach Anspruch 9, **dadurch gekennzeichnet, dass** der Innendorn (18) und der Außendorn (20) jeweils einen Zylinderabschnitt (44, 40) aufweisen, die so ineinander greifen, dass sie zumindest teilweise den Extrusionskanal (48) definieren, wobei sich die Wand des Zylinderabschnitts (44) des Innendorns (18) in der Nähe des Auslasses des Extrusionskanals (48) verjüngt.

11. Anlage nach Anspruch 10, **dadurch gekennzeichnet, dass** die Wand des Zylinderabschnitts (44) des Innendorns (18) eine Wandstärke zwischen 0,1 mm und 1 mm in der Nähe des Auslasses des Extrusionskanals (48) aufweist.

12. Anlage nach einem der Ansprüche 10 und 11, **dadurch gekennzeichnet, dass** die Innenfläche des Zylinderabschnitts (44) einen geringen Winkel α mit der Auflagefläche (50) einschließt.

13. Anlage nach einem der Ansprüche 10 bis 12, **dadurch gekennzeichnet, dass** der Zylinderabschnitt (44) des Innendorns (18) kürzer als der Zylinderabschnitt (40) des Außendorns (20) ist, so dass das Ende des Zylinderabschnitts (40) die Auflagefläche (50) bildet.

14. Anlage nach einem der Ansprüche 10 bis 13, **dadurch gekennzeichnet, dass** die Tropfspenderzuführstation (37) einen Führungsträger (30) aufweist, der in den Innendorn (18) bis in Höhe der Auflagefläche (50) eingreift, wobei die der Auflagefläche (50) gegenüberliegende Fläche die Gegenauflagefläche (56) bildet.

15. Anlage nach einem der Ansprüche 10 bis 13, **dadurch gekennzeichnet, dass** der Innendorn (18) eine Nut (52) aufweist, die in dem Zylinderabschnitt (44) ausgebildet ist und deren Nutgrund einen geringen Winkel α mit der Auflagefläche (50) bildet und mit der Außenfläche des Zylinderabschnitts (44) an ihrem äußeren Ende bündig liegt.

16. Anlage nach einem der Ansprüche 14 und 15, **dadurch gekennzeichnet, dass** die Oberseite des Führungsträgers (30) im wesentlichen parallel zum Nutgrund der Nut (52) zumindest über einen dieser gegenüberliegenden Abschnitt verläuft.

17. Anlage nach einem der Ansprüche 14 bis 16, **dadurch gekennzeichnet, dass** die Oberseite des Führungsträgers (30) eine Führungsschiene (54) bildet.

18. Anlage zum Herstellen eines Rohrs (8) zur tropfenweisen Bewässerung, das aus einem Rohr (8) mit Tropfspendern (4) gebildet ist, enthaltend eine Tropfspenderzuführstation (37) gefolgt von einer Extrusionsstation (10) mit einem Extrusionskopf (14), der einen rohrförmigen Rohling (22) erzeugt, Kalibriermitteln (24) zum Kalibrieren des rohrförmigen Rohlings (22) und Mitteln zum Verschweißen der Tropfspender (4) mit der Innenwand des Rohlings (22), **dadurch gekennzeichnet, dass** die Mittel zum Verschweißen der Tropfspender (4) eine Auflagefläche (56) aufweisen, die dem rohrförmigen Rohling (22) in einem Abstand gegenüberliegt, der so gewählt ist, dass die Tropfspender (4) zwischen der Auflagefläche (56) und dem rohrförmigen Rohling (22) so angedrückt werden, dass sie damit verschweißt werden, wobei die Auflagefläche (56) innerhalb des Extrusionskopfs angelagert ist.

19. Anlage nach Anspruch 18, **dadurch gekennzeichnet, dass** die Tropfspenderzuführstation (37) so angeordnet ist, dass sie die Tropfspender (4) auf die Auflagefläche (56) führt.

20. Anlage nach einem der Ansprüche 18 und 19, **dadurch gekennzeichnet, dass** die Auflagefläche (56) in unmittelbarer Nähe des Extrusionskopfes (14) angeordnet ist.

21. Anlage nach Anspruch 20, **dadurch gekennzeichnet, dass** der Extrusionskopf (14) eine Düse (16) aufweist, die aus einem Außendorn (20) und einem Innendorn (18) gebildet ist, die zusammen so angeordnet sind, dass sie einen Extrusionskanal (48) definieren, in welchen sich der rohrförmige Rohling (22) bildet, und dass die Tropfspenderzuführstation (37) einen Führungsträger (30) aufweist, der in den Innendorn (18) bis in Höhe des rohrförmigen Rohlings (22) eingreift, wobei die dem rohrförmigen Rohling (22) gegenüberliegende Fläche die Auflagefläche (56) bildet.

22. Anlage nach Anspruch 21, **dadurch gekennzeichnet, dass** der Innendorn (18) und der Außendorn (20) jeweils einen Zylinderabschnitt (44, 40) aufweisen, die so ineinander greifen, dass sie zumindest teilweise den Extrusionskanal (48) definieren, wobei sich die Wand des Zylinderabschnitts (44) des Innendorns (18) in der Nähe des Auslasses des Extrusionskanals (48) verjüngt.

23. Anlage nach Anspruch 22, **dadurch gekennzeichnet, dass** die Wand des Zylinderabschnitts (44) des Innendorns (18) eine Wandstärke zwischen 0,1 mm und 1 mm in der Nähe des Auslasses des Extrusionskanals (48) aufweist.

24. Anlage nach einem der Ansprüche 22 und 23, **dadurch gekennzeichnet, dass** die Innenfläche des Zylinderabschnitts (44) einen geringen Winkel α mit der Auflagefläche (50) einschließt.
